# EUROPÄISCHE PATENTSCHRIFT

(11) **EP 0 856 523 B1**
(45) Veröffentlichungstag und Bekanntmachung des Hinweises auf die Patenterteilung: **14.07.2004**
(21) Anmeldenummer: 98100330.4
(22) Anmeldetag: 10.01.1998
(51) Int. Cl.: C08F 4/60, C08F 10/00

(54) **Verfahren zur Herstellung eines Metallocen-Katalysatorsystems**
Process for the preparation of a metallocene catalyst system
Procédé de préparation d'un système catalytique à base de métallocène

(30) Priorität: 31.01.1997 DE 19703478
(43) Veröffentlichungstag der Anmeldung: 05.08.1998
(73) Patentinhaber: Basell Polyolefine GmbH, 50389 Wesseling (DE)
(72) Erfinder: Fritze, Cornelia, Dr., 60529 Frankfurt (DE); Bohnen, Hans, Dr., 65527 Niedernhausen (DE); Küber, Frank, Dr., 61440 Oberursel (DE)

(56) Entgegenhaltungen:
- EP-A- 0 500 944
- EP-A- 0 573 403
- WO-A-95/10546

## Beschreibung

Die vorliegende Erfindung betrifft ein Verfahren zur Herstellung eines Metallocen-Katalysatorsystems, welches zur Polymerisation von Olefinen geeignet ist. Die in dem Verfahren entstehenden Zwischenprodukte werden nicht isoliert, sondern werden in Lösung direkt für weitere Verfahrensschritte eingesetzt.

Kohlenwasserstoffsubstituierte Metallocenverbindungen wie Mono- und Dialkyl- bzw. Mono- und Diaryl-Metallocenverbindungen bilden in Kombination mit speziellen Co-Katalysatoren aktive Katalysatorsysteme, die zur Polymerisation von Olefinen geeignet sind (EP 468537, EP 427697, J. Am. Chem. Soc. 1989, 111, 2728). Durch die Trägerung solcher Systeme läßt sich zudem eine bessere Polymermorphologie erzielen (EP 614468, EP 507876).

EP-A-500 944, WO 95/10546 und EP-A-573 403 beschreiben Verfahren zur Herstellung von Metallocen-Katalysatorsystemen, bei denen eine Metallocenverbindung mit einer Kohlenwasserstoffrest-übertragenden Verbindungen in einem Lösemittel umgesetzt wird und die dabei entstandene, mit einem oder mehreren Kohlenwasserstoffresten substituierte Metallocenverbindung ohne Isolierung in Lösung mit einem Aktivator in ein polymerisationsaktives Katalysatorsystem überführt wird. Die Katalysatoren können auch geträgert werden.

Aufgabe der vorliegenden Erfindung war es daher, ein Verfahren zur Verfügung zu stellen, in dem ein polymerisationsaktiver kohlenwasserstoffsubstituierter Metallocenkatalysator auf einfache und wirtschaftliche Weise hergestellt wird.

Die Aufgabe wird gelöst, durch ein Verfahren zur Herstellung eines Metallocen-Katalysatorsystems bei dem eine Metallocenausgangsverbindung mit einer Kohlenwasserstoffrest-übertragenden Verbindung in einem Lösemittel umgesetzt wird und die dabei entstandene, mit einem oder mehreren Kohlenwasserstoffresten σ-substituierte Metallocenverbindung ohne Isolierung in Lösung mit einem Aktivator in ein polymerisationsaktives Katalysatorsystem überführt wird. Das in Lösung erhaltene Katalysatorsystem kann ohne vorherige Isolierung für einen Polymerisationsprozeß eingesetzt werden

Unter dem Begriff Lösung bzw. Losungsmittel werden auch Suspensionen bzw. Suspensionsmittel verstanden, d. h. die in dem erfindungsgemäßen Verfahren eingesetzten Edukte wie auch die erhaltenen Produkte können zum Teil oder vollständig gelöst sein oder auch zum Teil oder vollständig suspendiert vorliegen.

Als Metallocenausgangsverbindungen können z.B. Cyclopentadienylkomplexe dienen. Dies können z. B. verbrückte oder unverbrückte Biscyclopentadienylkomplexe sein, wie sie z.B. in EP 129 368, EP 561 479, EP 545 304 und EP 576 970 beschrieben sind, Monocyclopentadienylkomplexe, wie verbrückte Amidocyclopentadienylkomplexe die z.B. in EP 416 815 beschrieben sind, mehrkernige Cyclopentadienylkomplexe wie in EP 632 063 beschrieben, π-Ligand substituierte Tetrahydropentalene wie in EP 659 758 beschrieben oder π-Ligand substituierte Tetrahydroindene wie in EP 661 300 beschrieben.

Bevorzugte Metallocenausgangsverbindungen sind unverbrückte oder verbrückte Metallocenverbindungen der Formel I, 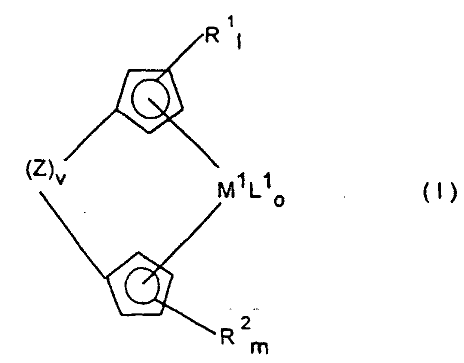 worin
- M¹: ein Metall der III, IV., V oder VI. Nebengruppe des Periodensystems der Elemente ist, insbesondere Ti, Zr oder Hf,
- R¹: gleich oder verschieden sind und ein Wasserstoffatom oder SiR₃³ sind, worin R³ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀₋Arylalkyl, C₇-C₄₀-Alkylaryl oder C₈-C₄₀-Arylalkenyl sind, oder R¹ sind eine C₁-C₃₀ - kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹ können so miteinander verbunden sein, daß die Reste R¹ und die sie verbindenden Atome des Cyclopentadienylringes ein C₄-C₂₄-Ringsystem bilden, welches seinerseits substituiert sein kann,
- R²: gleich oder verschieden sind und ein Wasserstoffatom oder SiR₃³ sind, worin R³ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R² sind eine C₁-C₃₀ - kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, z. B. Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R² können so miteinander verbunden sein, daß die Reste R² und die sie verbindenden Atome des Cyclopentadienylringes ein C₄-C₂₄-Ringsystem bilden, welches seinerseits substituiert sein kann,
- l: gleich 5 für v = 0, und l gleich 4 für v = 1 ist,
- m: gleich 5 für v = 0, und m gleich 4 für v = 1 ist,
- L¹: gleich oder verschieden sein können und ein Wasserstoffatom, ein Halogenatom, oder OR⁶, SR⁶, OSiR₃⁶, SiR₃⁶, PR₂⁶ oder NR₂⁶ bedeuten, worin R⁶ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluormethansulfonyl-, Nonafluorbutansulfonyl- oder 2,2,2-Trifluorethansulfonyl-Gruppe, bevorzugt ein Halogenatom,
- o: eine ganze Zahl von 1 bis 4, bevorzugt 2 ist,
- Z: ein verbrückendes Strukturelement zwischen den beiden Cyclopentadienylringen bezeichnet und v ist 0 oder 1.

Beispiele für Z sind Gruppen M²R⁴R⁵, worin M² Kohlenstoff, Silizium, Germanium oder Zinn ist und R⁴ und R⁵ gleich oder verschieden eine C₁-C₂₀kohlenwasserstoffhaltige Gruppe wie C₁-C₁₀-Alkyl, C₆-C₁₄-Aryl oder Trimethylsilyl bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅)(CH₃)Si, (C₆H₅)₂Ge, (C₆H₅)₂Sn, (CH₂)₄Si, CH₂Si(CH₃)₂, O-C₆H₄ oder 2,2'-(C₆H₄)₂. Z kann auch mit einem oder mehreren Resten R¹ und/oder R² ein mono- oder polycyclisches Ringsystem bilden.

Bevorzugt sind chirale verbrückte Metallocenausgangsverbindungen der Formel I, insbesondere solche in denen v gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit C₁-C₂₀-kohlenstoffhaltigen Gruppen, wie C₁-C₁₀-Alkyl oder C₆-C₂₀-Aryl, wobei auch zwei oder mehrere Substituenten des Indenylrings zusammen ein Ringsystem bilden können.
Chirale verbrückte Metallocenausgangsverbindungen der Formel I können als racemische oder reine meso Verbindungen eingesetzt werden. Es können aber auch Gemische aus einer racemischen Verbindung und einer meso Verbindung verwendet werden

Beispiele für Metallocenausgangsverbindungen sind:
Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis(2-methyl-indenyl)zirkoniumdichlorid
Dimethylsilandiylbis(2-methyl-4-( 1-naphthyl)-indenyl)zirkoniumdichlorid
Dimethylsilandiylbis(2-methyl-4-(2-naphthyl)-indenyl)zirkoniumdichlorid
Dimethylsilandiylbis(2-methyl-4-phenyl-indenyl)zirkoniumdichlorid
Dimethylsilandiylbis(2-methyl-4-t-butyl-indenyl)zirkoniumdichlorid
Dimethylsilandiylbis(2-methyl-4-isopropyl-indenyl)zirkoniumdichlorid
Dimethylsilandiylbis(2-methyl-4-ethyl-indenyl)zirkoniumdichlorid
Dimethylsilyl-bis-(indenyl)-hafnium-dichlorid
Dimethylsilandiylbis(2 -methyl-4-α-acenaphth-indenyl)zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl)zirkoniumdichlorid
Dimethylsilandiybis(2-methyl-4,5-benzo-indenyl)zirkoniumdichlorid
Dimethylsilandiylbis(2-methyl-4,6 diisopropyl-indenyl)zirkoniumdichlorid
Dimethylsilandiylbis(2-methyl-4,5 diisopropyl-indenyl)zirkoniumdichlorid
Dimethylsilandiylbis(2,4,6-trimethyl-indenyl)zirkoniumdichlorid
Dimethylsilandiylbis(2,5,6-trimethyl-indenyl)zirkoniumdichlorid
Dimethylsilandiylbis(2,4,7-trimethyl-indenyl)zirkoniumdichlorid
Dimethylsilandiylbis(2-methyl-5-isobutyl-indenyl)zirkoniumdichlorid
Dimethylsilandiylbis(2-methyl-5-t-butyl-indenyl)zirkoniumdichlorid
Methyl(phenyl)silandiylbis(2-methyl-4-phenyl-indenyl)zirkoniumdichlorid
Methyl(phenyl)silandiylbis(2-methyl-4,6 diisopropyl-indenyl)zirkoniumdichlorid
Methyl(phenyl)silandiyibis(2-methyl-4-isopropyl-indenyl)zirkoniumdichlorid
Methyl(phenyl)silandiylbis(2-methyl-4,5-benzo-indenyl)zirkoniumdichlorid
Methyl(phenyl)silandiylbis(2-methyl-4,5-(methylbenzo)-indenyl)zirkoniumdi-chlorid
Methyl(phenyl)silandiylbis(2-methyl-4,5-(tetramethylbenzo)-indenyl)zirkoniumdichlorid
Methyl(phenyl)silandiylbis(2-methyl-4-α-acenaphth-indenyl)zirkoniumdichlorid
Methyl(phenyl)silandiylbis(2-methyl-indenyl)zirkoniumdichlorid
Methyl(phenyl)silandiylbis(2-methyl-5-isobutyl-indenyl)zirkoniumdichlorid
1,2-Ethandiylbis(2-methyl-4-phenyl-indenyl)zirkoniumdichlorid
1,4-Butandiylbis(2-methyl-4-phenyl-indenyl)zirkoniumdichlorid
1,2-Ethandiylbis(2-methyl-4,6 diisopropyl-indenyl)zirkoniumdichlorid
1,4-Butandiylbis(2-methyl-4-isopropyl-indenyl)zirkoniumdichlorid
1,4-Butandiylbis(2-methyl-4,5-benzo-indenyl)zirkoniumdichlorid
1,2-Ethandiylbis(2-methyl-4,5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis(2-methyl-indenyl)zirkoniumdichlorid
[4-(η⁵-Cyclopentadienyl)-4,6,6-trimethyl-(η⁵-4,5-tetrahydropentalen)]-dichlorozirconium
[4-(η⁵-3'-Trimethylsilyl-cyclopentadienyl)-4,6,6-trimethyl-(η⁵-4,5-tetrahydropentalen)]-dichlorozirconium
[4-(η⁵-3'-Isopropyl-cyclopentadienyl)-4,6,6-trimethyl-(η⁵-4,5-tetrahydropentalen)]-dichlorozirconium
[4-(η⁵-Cyclopentadienyl)-4,7,7-trimethyl-(η⁵-4,5,6,7-tetrahydroindenyl)]-dichlorotitan
[4-(η⁵-Cyclopentadienyl )-4,7,7-trimethyl-(η⁵-4,5,6,7-tetrahydroindenyl)]-dichlorozirkonium
[4-(η⁵-Cyclopentadienyl)-4,7,7-trimethyl-(η⁵-4,5,6,7-tetrahydroindenyl)]-dichlorohafnium
[4-(η⁵-3'-tert. Butyl-cyclopentadienyl)-4,7,7-trimethyl-(η⁵-4,5,6,7-tetrahydroindenyl)]-dichlorotitan
4-(η⁵-3'-Isopropylcyclopentadienyl)-4,7,7-trimethyl-(η⁵-4,5,6,7-tetrahydroindenyl)]-dichlorotitan
4-(η⁵-3'-Methylcyclopentadienyl)-4,7,7-trimethyl-(η⁵-4,5,6,7-tetrahydroindenyl)]-dichlorotitan
4-(η⁵-3'-Trimethylsilyl-cyclopentadienyl)-2-trimethylsilyl-4,7,7-trimethyl-(η⁵-4,5,6,7-tetrahydroindenyl)]-dichlorotitan
4-(η⁵-3'-tert.Butyl-cyclopentadienyl)-4,7,7-trimethyl-{η⁵-4,5,6,7-tetrahydroindenyl)]-dichlorozirkonium
(Tertbutylamido)-(tetramethyl-η⁵-cyclopentadienyl)-dimethylsilyl-dichlorotitan
(Tertbutylamido)-(tetramethyl-η⁵-cyclopentadienyl)-1,2-ethandiyl-dichlorotitandichlorotitan
(Methylamido)-(tetramethyl-η⁵-cyclopentadienyl)-dimethysilyl-dichlorotitan
(Methylamido)-(tetramethyl-η⁵-cyclopentadienyl)-1,2-ethandiyl-dichlorotitan
(Tertbutylamido)-(2,4-dimethyl-2,4-pentadien-1-yl)-dimethylsilyl-dichlorotitan Bis-(cyclopentadienyl)-zirkoniumdichlorid
Bis-(n-butylcyclopentadienyl)-zirkoniumdichlorid
Bis-(1,3-dimethylcyclopentadienyl)-zirkoniumdichlorid
Tetrachloro-[1-[bis(η⁵-1H-inden-1-yliden)methylsilyl]-3-η⁵-cyclopenta-2,4-dien-1-yliden)-3-η⁵-9H-fluoren-9-yliden)butan]di-zirkonium
Tetrachloro-[2-(bis(η⁵-2-methyl-1H-inden-1-yliden)methoxysilyl]-5-(η⁵-2,3,4,5-tetramethylcyclopenta-2,4-dien-1-yliden)-5-(η⁵-9H-fluoren-9-yliden)hexan]dizirkonium
Tetrachloro-[1-[bis(η⁵ -1H-inden-1-yliden)methylsilyl]-6-(η⁵-cyclopenta-2,4-dien-1-yliden)-6-(η⁵ -9H-fluoren-9-yliden)-3-oxaheptan]di-zirkonium

Die Kohlenwasserstoffrest-übertragenden Verbindungen weisen bevorzugt die Formel II auf,

M²L² _{q}L^{1'} ᵣ (II)

worin
- L²: einen Kohlenwasserstoffrest mit 1-20 Kohlenstoffatomen bedeutet, z.B. C₁-C₂₀-Alkyl, C₂-C₂₀-Alkenyl, C₆-C₂₀-Aryl oder C₇-C₂₀-Alkyl-Aryl,
- L^{1'}: ein Halogenatom, bedeutet,
- M²: Magnesium oder Lithium ist,
- q: 1, und r 0 oder 1 ist.

Die Kohlenwasserstoffrest-übertragenden Verbindungen sind Grignard-Verbindungen, oder Organolithium-Verbindungen.

Besonders bevorzugt sind Methyllithium oder Grignard-Verbindungen wie Methylmagnesiumhalogenide oder Benzylmagnesiumhalogenide. Ganz besonders bevorzugt sind Methylmagnesiumchlorid, Methylmagnesiumbromid, Benzylmagnesiumchlorid, Benzylmagnesiumbromid oder Methylithium.

Die mit einem oder mehreren Kohlenwasserstoffresten o-substituierten Metallocenverbindungen können Cyclopentadienylkomplexe sein, z.B. verbrückte oder unverbrückte Biscyclopentadienylkomplexe wie sie in EP 129 368, EP 561 479, EP 545 304 und EP 576 970 beschrieben sind, Monocyclopentadienylkomplexe, wie verbrückte Amidocyclopentadienylkomplexe die z.B. in EP 416 815 beschrieben sind, mehrkernige Cyclopentadienylkomplexe wie in EP 632 063 beschrieben, π-Ligand substituierte Tetrahydropentalene wie in EP 659758 beschrieben oder π-Ligand substituierte Tetrahydroindene wie in EP 661 300 beschrieben.

Besonders bevorzugt sind unverbrückte und verbrückte, mit einem oder mehreren Kohlenwasserstoffresten σ-substituierte Metallocenverbindungen, die durch die Formel III beschrieben werden, 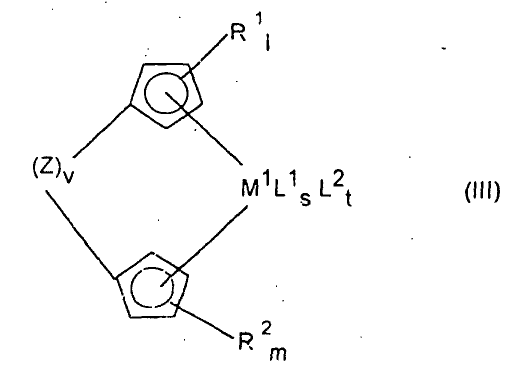 worin
- M¹: ein Metall der III., IV., V. oder VI. Nebengruppe des Periodensystems der Elemente ist, insbesondere Ti, Zr oder Hf,
- R¹: gleich oder verschieden sind und ein Wasserstoffatom oder SiR₃³ sind, worin R³ gleich oder verschieden ein Wasserstoffatom oder eine C₁-C₄₀-kohlenstoffhaltige Gruppe wie C₁-C₂₀-Alkyl, C₁-C₁₀-Fluoralky, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R¹ sind eine C₁-C₃₀ - kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹ können so miteinander verbunden sein, daß die Reste R¹ und die sie verbindenden Atome des Cyclopentadienylringes ein C₄-C₂₄-Ringsystem bilden, welches seinerseits substituiert sein kann,
- R²: gleich oder verschieden sind und ein Wasserstoffatom oder SiR₃³ sind, worin R³ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy , C₂-C₁₀-Alkenyl, C₇-C₄₀-Arylalkyl, C₇-C₄₀-Alkylaryl oder C₈-C₄₀-Arylalkenyl sind, oder R² sind eine C₁-C₃₀ - kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, z. B. Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇C₃₀-Alkylaryl oder C₁-C₁₂-Alkoxy ist, oder zwei oder mehrere Reste R² können so miteinander verbunden sein, daß die Reste R² und die sie verbindenden Atome des Cyclopentadienylringes ein C₄-C₂₄-Ringsystem bilden, welches seinerseits substituiert sein kann,
- l: gleich 5 für v = 0, und l gleich 4 für v = 1 ist,
- m: gleich 5 für v = 0, und m gleich 4 für v = 1 ist,
- L¹: gleich oder verschieden sein können und ein Wasserstoffatom, ein Halogenatom, oder OR⁶, SR⁶, OSiR₃6, SiR₃⁶, PR₂⁶ oder NR₂⁶ bedeuten, worin R⁶ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluormethansulfonyl-, Nonafluorbutansulfonyl- oder 2,2,2-Trifluorethansulfonyl-Gruppe,
- L²: gleich oder verschieden sind und einen Kohlenwasserstoffrest mit 1-20 Kohlenstoffatomen bedeuten, z.B. C₁-C₂₀-Alkyl, C₂-C₂₀-Alkenyl, C₆-C₂₀-Aryl oder C₇-C₂₀-Alkyl-Aryl,
- s: eine ganze Zahl von 0 bis 4, bevorzugt 0 oder 1 ist,
- t: eine ganze Zahl von 1 bis 4, bevorzugt 1 oder 2, insbesondere 2 ist, und
- Z: ein verbrückendes Strukturelement zwischen den beiden Cyclopentadienylringen bezeichnet und v ist 0 oder 1.

Beispiele für Z sind Gruppen M²R⁴R⁵, worin M² Kohlenstoff, Silizium, Germanium oder Zinn ist und R⁴ und R⁵ gleich oder verschieden eine C₁-C₂₀kohlenwasserstoffhaltige Gruppe wie C₁-C₁₀-Alkyl, C₆-C₁₄-Aryl oder Trimethylsilyl bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅)(CH₃)Si, (C₆H₅)₂Ge, (C₆H₅)₂Sn, (CH₂)₄Si, CH₂Si(CH₃)₂, o-C₆H₄ oder 2,2'-(C₆H₄)₂. Z kann auch mit einem oder mehreren Resten R¹ und/oder R² ein mono- oder polycyclisches Ringsystem bilden.

Bevorzugt sind chirale verbrückte mit einem oder mehreren Kohlenwasserstoffresten σ-substituierte Metallocenverbindungen der Formel III, insbesondere solche, in denen v gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit C₁-C₂₀-kohlenstoffhaltigen Gruppen, wie C₁-C₁₀-Alkyl oder C₆-C₂₀-Aryl, wobei auch zwei oder mehrere Substituenten des Indenylrings zusammen ein Ringsystem bilden können

Beispiele für mit einem oder mehreren Kohlenwasserstoffresten σ-substituierte Metallocenverbindungen sind:
Dimethylsilandiylbis(indenyl)zirkoniumdimethyl
Dimethylsilyl-bis-(indenyl)-hafnium-dimethyl
Dimethylsilandiylbis(4-naphthyl-indenyl)zirkoniumdimethyl
Dimethylsilandiylbis(2-methyl-benzo-indenyl)zirkoniumdimethyl
Dimethylsilandiylbis(2-methyl-indenyl)zirkoniumdimethyl
Dimethylsilandiylbis(2-methyl-4-(1-naphthyl)-indenyl)zirkoniumdimethyl
Dimethylsilandiylbis(2-methyl-4-(2-naphthyl)-indenyl)zirkoniumdimethyl
Dimethylsilandiylbis(2-methyl-4-phenyl-indenyl)zirkoniumdimethyl
Dimethylsilandiylbis(2-methyl-4-t-butyl-indenyl)zirkoniumdimethyl
Dimethylsilandiylbis(2-methyl-4-isopropyl-indenyl)zirkoniumdimethyl
Dimethylsilandiylbis(2-methyl-4-ethyl-indenyl)zirkoniumdimethyl
Dimethylsilandiylbis(2-methyl-4-α-acenaphth-indenyl)zirkoniumdimethyl
Dimethylsilandiylbis(2,4-dimethyl-indenyl)zirkoniumdimethyl
Dimethylsilandiylbis(2-ethyl-indenyl)zirkoniumdimethyl
Dimethylsilandiylbis(2-ethyl-4-ethyl-indenyl)zirkoniumdimethyl
Dimethylsilandiylbis(2-ethyl-4-phenyl-indenyl)zirkoniumdimethyl
Dimethylsilandiybis(2-methyl-4,5-benzo-indenyl)zirkoniumdimethyl
Dimethylsilandiylbis(2-methyl-4,6 diisopropyl-indenyl)zirkoniumdimethyl
Dimethylsilandiylbis(2-methyl-4,5 diisopropyl-indenyl)zirkoniumdimethyl
Dimethylsilandiylbis(2,4,6-trimethyl-indenyl)zirkoniumdimethyl
Dimethylsilandiylbis(2,5,6-trimethyl-indenyl)zirkoniumdimethyl
Dimethylsilandiylbis(2,4,7-trimethyl-indenyl)zirkoniumdimethyl
Dimethylsilandiylbis(2-methyl-5-isobutyl-indenyl)zirkoniumdimethyl
Dimethylsilandiylbis(2-methyl-5-t-butyl-indenyl)zirkoniumdimethyl
Methyl(phenyl)silandiylbis(2-methyl-4-phenyl-indenyl)zirkoniumdimethyl
Methyl(phenyl)silandiylbis(2-methyl-4,6 diisopropyl-indenyl)zirkoniumdimethyl
Methyl(phenyl)silandiylbis(2-methyl-4-isopropyl-indenyl)zirkoniumdimethyl
Methyl(phenyl)silandiylbis(2-methyl-4,5-benzo-indenyl)zirkoniumdimethyl
Methyl(phenyl)silandiylbis(2-methyl-4,5-(methylbenzo)-indenyl)zirkoniumdi-methyl
Methyl(phenyl)siiandiylbis(2-methyl-4, 5-(tetramethylbenzo)-indenyl)zirkoniumdimethyl
Methyl(phenyl)silandiylbis(2-methyl-4-α-acenaphth-indenyl)zirkoniumdimethyl
Methyl(phenyl)silandiylbis(2-methyl-indenyl)zirkoniumdimethyl
Methyl(phenyl)silandiylbis(2-methyl-5-isobutyl-indenyl)zirkoniumdimethyl
1,2-Ethandiylbis(2-methyl-4-phenyl-indenyl)zirkoniumdimethyl
1,4-Butandiylbis(2-methyl-4-phenyl-indenyl)zirkoniumdimethyl
1,2-Ethandiylbis(2-methyl-4,6 diisopropyl-indenyl)zirkoniumdimethyl
1,4-Butandiylbis(2-methyl-4-isopropyl-indenyl)zirkoniumdimethyl
1,4-Butandiylbis(2-methyl-4,5-benzo-indenyl)zirkoniumdimethyl
1,2-Ethandiylbis(2-methyl-4,5-benzo-indenyl)zirkoniumdimethyl
1,2-Ethandiylbis(2,4,7-trimethyl-indenyl)zirkoniumdimethyl
1,2-Ethandiylbis(2-methyl-indenyl)zirkoniumdimethyl
1,4-Butandiylbis(2-methyl-indenyl)zirkoniumdimethyl
[4-(η⁵-Cyclopentadienyl)-4,6,6-trimethyl-(η⁵-4,5-tetrahydropentalen)]-dimethylzirconium
[4-(η⁵-3' - Trimethylsilyl-cyclopentadienyl)-4,6,6-trimethyl-(η⁵-4,5-tetrahydropentalen)]-dimethylzirconium
[4-(η⁵-3'-Isopropyl-cyclopentadienyl)-4,6,6-trimethyl-(η⁵-4,5-tetrahydropentalen)]-dimethylzirconium
[4-(η⁵-Cyclopentadienyl)-4, 7 ,7 -trimethyl-(η⁵ -4,5,6,7 -tetrahydroindenyl )]-dimethyltitan
[4-(η⁵-Cyclopentadienyl)-4,7, 7-trimethyl-(η ⁵-4,5,6,7-tetrahydroindenyl)]-dimethylzirkonium
[4-(η⁵ -Cyclopentadienyl)-4, 7,7 -trimethyl-(η⁵ -4,5,6,7-tetrahydroindenyl)]-dimethylhafnium
[4-(η⁵-3'-tert Butyl-cyclopentadienyl)-4,7,7-trimethyl-(η⁵-4,5,6,7-tetrahydroindenyl)]-dimethyltitan
4-(η⁵-3'-Isopropylcyclopentadienyl)-4,7,7-trimethyl-(η⁵-4,5,6,7-tetrahydroindenyl)]-dimethyltitan
4-(η⁵-3'-Methylcyclopentadenyl)-4,7,7-trimethyl-(η⁵-4,5,6,7-tetrahydroindenyl)]-dimethyltitan
4-(η⁵-3'-Trimethylsilyl-cyclopentadienyl)-2-trimethylsilyl-4,7,7-trimethyl-(η⁵-4,5,6,7-tetrahydroindenyl)]-dimethyltitan
4-(η⁵-3'-tert. Butyl-cyclopentadienyl)-4,7,7-trimethyl-{η⁵-4,5,6,7-tetrahydroindenyl)]-dimethylzirkonium
(Tertbutylamido)-(tetramethyl-η⁵-cyclopentadienyl)-dimethylsilyl-dimethyltitan
(Tertbutylamido)-(tetramethyl-η⁵-cyclopentadienyl)-1,2-ethandiyl-dichlorotitandimethyltitan
(Methylamide)-(tetramethyl-η⁵-cyclopentadienyl)-dimethylsilyl-dimethyltitan
(Methylamido)-(tetramethyl-η⁵-cyclopentadienyl)-1,2-ethandiyl-dimethyltitan
(Tertbutylamido)-(2,4-dimethyl-2,4-pentadien-1-yl)-dimethylsilyl-dimethyltitan Bis-(cyclopentadienyl)-zirkoniumdimethyl
Bis-(n-butylcyclopentadienyl)-zirkoniumdimethyl
Bis-(1,3-dimethylcyclopentadienyl)-zirkoniumdimethyl
Tetramethyl-[1-[bis(η⁵-1H-inden-1-yliden)methylsilyl]-3-η⁵-cyclopenta-2,4-dien-1-yliden)-3-η⁵-9H-fluoren-9-yliden)butan]di-zirkonium
Tetramethyl-[2-[bis(η⁵-2-methyl-1H-inden-1-yliden)methoxysilyl)-5-(η⁵-2,3,4,5-tetramethylcyclopenta-2,4-dien-1-yliden)-5-(η⁵-9H-fluoren-9-yliden)hexan]dizirkonium
Tetramethyl-[1-[bis(η⁵-1H-inden-1-yliden)methylsilyl)-6-(η⁵-cyclopenta-2,4-dien-1-yliden)-6-(η⁵-9H-fluoren-9-yliden)-3-oxaheptan]di-zirkonium
Dimehtylsilandiylbis(indenyl)zirkoniumchlormethyl
Dimethylsilandiylbis(2-methyl-4,5-benzo-indenyl)zirkoniumchlormethyl
Dimethylsilandiylbis(2-methyl-4-(1-naphthyl)-indenyl)zirkoniumchlormethyl
Dimethylsilandiylbis(2-methyl-4-pheny)-indenyl)zirkoniumchlormethyl
Dimethylsilandiylbis(2-methyl-4-isopropyl-indenyl)zirkoniumchlormethyl
Dimehtylsilandiylbis(indenyl)zirkoniumchlorbenzyl
Dimethylsilandiylbis(2-methyl-4,5-benzo-indenyl)zirkoniumchlorbenzyl
Dimethylsilandiylbis(2-methyl-4-(1-naphthyl)-indenyl)zirkoniumchlorbenzyl
Dimethylsilandiylbis(2-methyl-4-phenyl-indenyl)zirkoniumchlorbenzyl
Dimethylsilandiylbis(2-methyl-4-isopropyl-indenyl)zirkoniumchlorbenzyl
Dimehtylsilandiylbis(indenyl)zirkoniumdibenzyl
Dimethylsilandiylbis(2-methyl-4,5-benzo-indenyl)zirkoniumdibenzyl
Dimethylsilandiylbis(2-methyl-4-(1-naphthyl)-indenyl)zirkoniumdibenzyl
Dimethylsilandiylbis(2-methyl-4-phenyl-indenyl)zirkoniumdibenzyl
Dimethylsilandiylbis(2-methyl-4-isopropyl-indenyl)zirkoniumdibenzyl
[4-(η⁵-Cyclopentadienyl)-4,6,6-trimethyl-(η⁵-4,5-tetrahydropentalen)]-chlormethylzirkonium
[4-(η⁵-Cyclopentadienyl)-4,6,6-trimethyl-(η⁵-4,5-tetrahydropentalen)]-chlorbenzylzirkonium
(4-(η⁵-Cyclopentadienyl)-4,6,6-trimethyl-(η⁵-4,5-tetrahydropentalen)]-dibenzylzirkonium
[4-(η⁵-Cyclopentadienyl)-4,7,7-trimethyl-(η⁵-4,5,6,7-tetrahydroindenyl)]-chlormethylzirkonium
[4-(η⁵-Cyclopentadienyl)-4,7,7-tnmethyl-(η⁵-4,5,6,7-tetrahydroindenyl)]-chlorbenzylzirkonium
[4-(η⁵-Cyclopentadienyl)-4,7,7-trimethyl-(η⁵ -4,5,6,7 -tetrahydroindenyl)]-dibenzylzirkonium
(Tertbutylamino)-(tetramethyl-η⁵-cyclopentadienyl)-dimethylsilyl-chlormethyltitan
(Tertbutylamino)-(tetramethyl-η⁵-cyclopentadienyl)-dimethylsilylchlormethylzirkonium
(Tertbutylamino)-(tetramethyl-η⁵-cyclopentadienyl)-dimethylsilyl-chlorbenzyltitan
(Tertbutylamino)-(tetramethyl-η⁵-cyclopentadienyl)-dimethylsilylchlorbenzylzirkonium
(Tertbutylamino)-(tetramethyl-η⁵-cyclopentadienyl)-dimethylsilyl-dibenzyltitan
(Tertbutylamino)-(tetramethyl-η⁵-cyclopentadienyl)-dimethylsilyl-dibenzylzirkonium
Bis-(1,3-dimethylcyclopentadienyl)-zirkoniumchlormethyl
Bis-(1,3-dimethylcydopentadienyl)-zirkoniumchlorbenzyl
Bis-(1,3-dimethylcyclopentadienyl)-zirkoniumdibenzyl
Dichlordimethyl-[1-[bis(η⁵-1H-inden-1-yliden)methylsilyll-3-η⁵-cyclopenta-2,4-dien-1-yliden)-3-η⁵-9H-fluoren-9-yliden)butan]di-zirkonium
Dichlordibenzyl-[1-[bis(η⁵-1H-inden-1-yliden)methylsilyl]-3-η⁵-cyclopenta-2,4-dien-1-yliden)-3-η⁵ -9H-fluoren-9-yliden)butan]di-zirkonium
Tetrabenzyl-[1-[bis(η⁵-1H-inden-1-yliden)methylsilyl]-3-η⁵-cyclopenta-2,4-dien-1-yliden)-3-η⁵-9H-fluoren-9-yliden)butan]di-zirkonium

Die bei der Reaktion entstehenden Nebenprodukte werden vorzugsweise durch die Formel IV wiedergegeben,

M²L² _{w}L¹ ₓ (IV)

worin
- L²: gleich oder verschieden sind und einen Kohlenwasserstoffrest mit 1-20 Kohlenstoffatomen bedeuten, z.B. C₁-C₂₀-Alkyl, C₂-C₂₀-Alkenyl, C₆-C₂₀-Aryl oder C₇-C₂₀-Alkyl-Aryl,
- L¹: gleich oder verschieden sind und ein Wasserstoffatom, ein Halogenatom, oder OR⁶, SR⁶, OSiR₃⁶, SiR₃⁶, PR₂⁶ oder NR₂⁶ bedeuten, worin R⁶ ein Halogenatom, eine C₁-C₁₀-Alkylgruppe, eine halogenierte C₁-C₁₀-Alkylgruppe, eine C₆-C₂₀-Arylgruppe oder eine halogenierte C₆-C₂₀-Arylgruppe sind, oder L¹ eine Toluolsulfonyl-, Trifluoracetyl-, Trifluoracetoxyl-, Trifluormethansulfonyl-, Nonafluorbutansulfonyl- oder 2,2,2-Trifluorethansulfonyl-Gruppe sind,
- M²: Magnesium oder Lithium ist,
- w: 0 und x 1 oder 2 ist.

Bevorzugt verläuft die Übertragung der Kohlenwasserstoffreste auf die Metallocenausgangsverbindung nach dem folgenden Reaktionsschema, 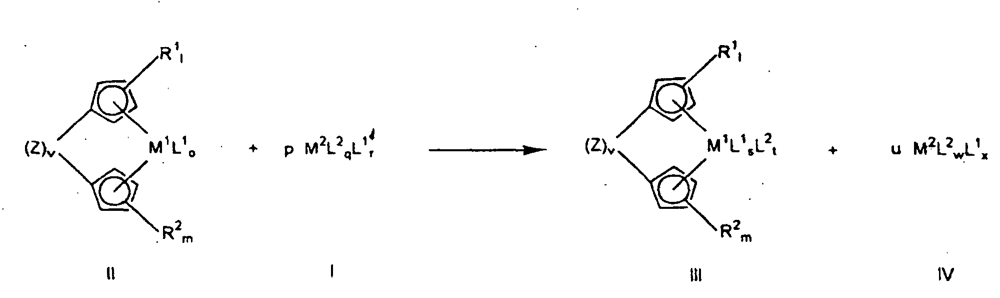 worin die Verbindungen der Formeln I, II, III und IV wie oben angegeben definiert sind und p und u ganze Zahlen sind, die die stochiometrischen Verhältnisse der Edukte und Produkte angeben.

Bei dem erfindungsgemäßen Verfahren wird die Metallocenausgangsverbindung in einem Lösemittel vorgelegt, welches vorzugsweise ein organisches Lösemittel ist, z.B. aliphatische und/oder aromatische Kohlenwasserstoffe. Besonders bevorzugt sind dabei Hexan, Heptan, Octan, Toluol und Xylol. Ebenfalls bevorzugt sind etherische Lösemittel wie Diethylether oder Tetrahydrofuran. Es können auch Lösemittelgemische verwendet werden.
Die Kohlenwasserstoffrest-übertragende Verbindung kann direkt in einem Lösemittel z.B. einem organischen Lösemittel gelöst oder suspendiert zugegeben werden. Die Reaktionstemperatur kann zwischen -20 und + 200 °C liegen. Besonders bevorzugt sind dabei Temperaturen zwischen + 20 und + 100 °C. Die Reaktionszeit beträgt bevorzugt zwischen 5 Minuten und 24 Stunden, besonders bevorzugt zwischen 30 Minuten und 6 Stunden.

Das stöchiometrische Verhältnis in dem die Metallocenausgangsverbindung, insbesondere der Formel I, mit der Kohlenwasserstoffrest-übertragenden Verbindung, der Formel II, umgesetzt wird, liegt zwischen 1 : 0,1 bis 1 : 20. Bevorzugt sind stöchiometrische Verhältnisse zwischen 1 : 0,3 und 2,5 : 1, je nach gewünschtem Substitutionsgrad an Kohlenwasserstoffresten.

Die mit einem oder mehreren Kohlenwasserstoffresten σ-substituierte Metallocenverbindung fällt bei dieser Umsetzung in Lösung an und wird ohne Isolierung in einer zweiten Reaktionsstufe mit einem Aktivator in ein polymerisationsaktives Katalysatorsystem überführt, welches das Reaktionsprodukt der Metallocenverbindung und des Aktivators enthält. Dabei wird die in Lösung befindliche, mit einem oder mehreren Kohlenwasserstoffresten σ-substituierte Metallocenverbindung nach der Abtrennung unlöslicher Rückstände in Lösung mit einem Aktivator umgesetzt, wodurch ein polymerisationsaktives Katalysatorsystem gebildet wird. Die Abtrennung unlöslicher Rückstände kann z.B. durch Filtration erfolgen. Eine Isolierung der mit einem oder mehreren Kohlenwasserstoffresten σ-substituierten Metallocenverbindung erfolgt nicht. Als Aktivator können starke, neutrale Lewissäuren, ionische Verbindungen mit lewissauren Kationen oder ionische Verbindungen mit Brönsted-Säuren als Kationen dienen. Bevorzugt sind als Aktivator Verbindungen der Formel V, 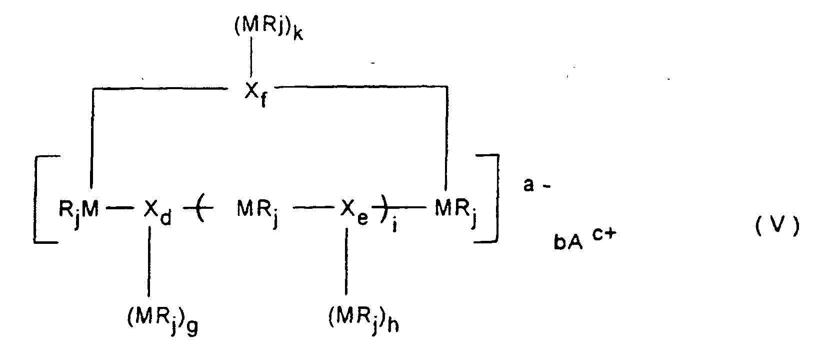 worin
- R: unabhängig voneinander gleich oder verschieden ein Halogenatom oder eine C₁-C₄₀-kohlenstoffhaltige Gruppe sind wie eine C₁-C₄₀-Alkyl-, C₁-C₄₀-Halogen- Alkyl-, C₆-C₄₀-Aryl-, C₆-C₄₀-Halogen-Aryl-, C₇-C₄₀-Arylalkyl- oder C₇-C₄₀-Halogen-Arylalkyl-Gruppe,
- X: unabhängig voneinander gleich oder verschieden eine C₁-C₄₀-kohlenstoffhaltige Gruppe sind z.B. eine zweibindige kohlenstoffhaltige Gruppe wie eine C₁-C₄₀-Alkylen-, C₁-C₄₀-Halogen- Alkylen-, C₆-C₄₀-Arylen-, C₆-C₄₀-Halogen-Arylen-, C₇-C₄₀-Arylalkylen- oder C₇-C₄₀-Halogen-Arylalkylen-, C₂-C₄₀-Alkynylen-, C₂-C₄₀-Halogen-Alkinylen-, C₂-C₄₀-Alkenylen- oder C₂-C₄₀-Halogen-Alkenylen-Gruppe oder eine dreibindige kohlenstoffhaltige Gruppe wie eine C₁-C₄₀-Alkantriyl-, C₁-C₄₀-Halogenalkantriyl-, C₆-C₄₀-Arentriyl-, C₆-C₄₀-Halogenarentriyl-, C₇-C₄₀-Arenalkantriyl-, C₇-C₄₀-Halogenarenalkantriyl-, C₂-C₄₀-Alkintriyl-, C₂-C₄₀-Halogenalkintriyl-, C₂-C₄₀-Alkentriyl- oder C₂-C₄₀-Halogenalkentriyl-Gruppe,
- M: unabhängig voneinander gleich oder verschieden sind und ein Element der Gruppen IIa, IIIa, IVa oder Va des Periodensystems der Elemente bedeuten,
- a: eine ganze Zahl von 0 bis 10 ist, b eine ganze Zahl von 0 bis 10 ist, c eine ganze Zahl von 0 bis 10 ist und a = b· c ist,
- d: gleich 0 oder 1 ist, e gleich 0 oder 1 ist, f gleich 0 oder 1 ist,
- g: eine ganze Zahl von 0 bis 10 ist, h eine ganze Zahl von 0 bis 10 ist, k eine ganze Zahl von 0 bis 10 ist,
- i: eine ganze Zahl von 0 bis 1000 ist,
- j: eine ganze Zahl von 1 bis 6 ist und
- A: ein Kation der Gruppe la, IIa, IIIa des Periodensystems der Elemente, ein Carbenium-, Oxonium- oder Sulfonium-Kation oder eine quartäre Ammonium-Verbindung ist.

Wenn a = 0 ist, so handelt es sich um eine neutrale chemische Verbindung; wenn a ≥ 1 ist, so handelt es sich um eine negativ geladene Verbindung mit b Kationen A^{c+} als Gegenion.

Weist die chemische Verbindung der Formel V mehrere Gruppen MRⱼ auf, so können diese gleich oder voneinander verschieden sein. Die Zahl j der Reste R in einer Gruppe MRj hängt ab von der Bindigkeit und der Wertigkeit des jeweiligen M.

Die Struktureinheit X verbindet die Elemente M durch kovalente Bindungen miteinander. X kann ein lineares, cyclisches oder verzweigtes Kohlenstoffgerüst aufweisen.

R ist bevorzugt ein C₁-C₄₀-Kohlenwasserstoffrest, der mit Halogenen wie Fluor, Chlor, Brom oder Iod halogeniert bevorzugt perhalogeniert sein kann, insbesondere eine halogenierte, insbesondere perhalogenierte C₁-C₃₀-Alkylgruppe wie Trifluormethyl, Pentachlorethyl, Heptafluorisopropyl oder Monofluorisobutyl oder eine halogenierte, insbesondere perhalogenierte C₆-C₃₀-Arylgruppe wie Pentafluorphenyl, Heptachlornaphthyl, Heptafluornaphthyl, Heptafluortolyl, 3,5-bis(trifluor-methyl)phenyl, 2,4,6-tris(trifluormethyl)phenyl oder 2,2' (octafluor)biphenyl.

X ist bevorzugt eine C₆-C₃₀-Arylengruppe, eine C₂-C₃₀-Alkenylengruppe oder eine C₂-C₃₀-Alkinylengruppe, die halogeniert, insbesondere perhalogeniert sein kann. Bevorzugt ist j = 1 oder 2, wenn M ein Element der Gruppe IIa ist, j = 2 oder 3, wenn M ein Element der Gruppe IIIa ist, j = 3 oder 4, wenn M ein Element der Gruppe IVa ist und j = 4 oder 5, wenn M ein Element der Gruppe Va ist. Besonders bevorzugt ist M gleich Bor als Element der Gruppe IIIa.
i ist bevorzugt eine ganze Zahl von 0 bis 6, besonders bevorzugt 0 oder 1.
a, b und c sind bevorzugt 0, 1 oder 2.
g, h und k sind bevorzugt 0 oder 1.
Als A sind Carbenium-Ionen (R₃C⁺) oder quartäre Ammonium-Ionen mit einer aciden H-Funktion (R₃NH⁺) bevorzugt. Besonders bevorzugt sind quartäre Ammoniumsalze mit aciden H-Funktionen.

Beispiele für Aktivatoren der Formel V sind:

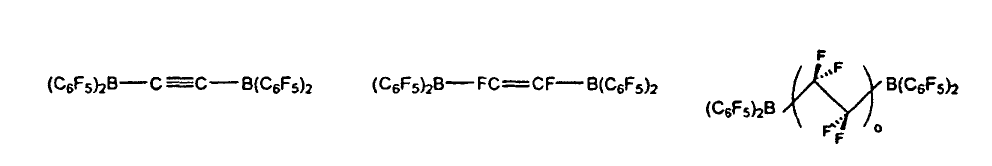

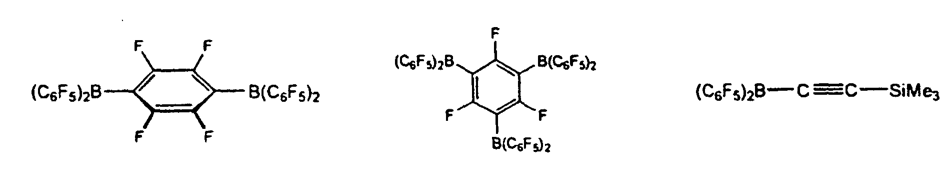

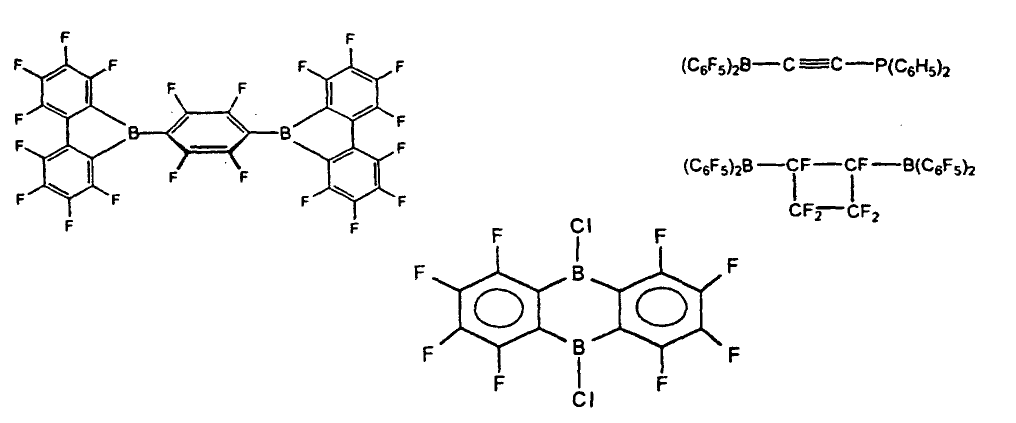

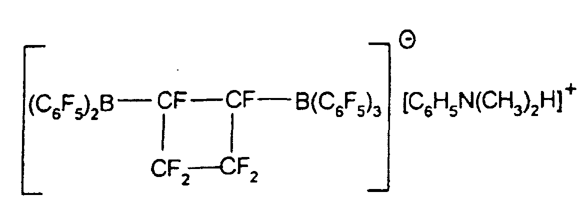

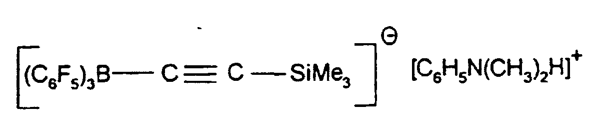

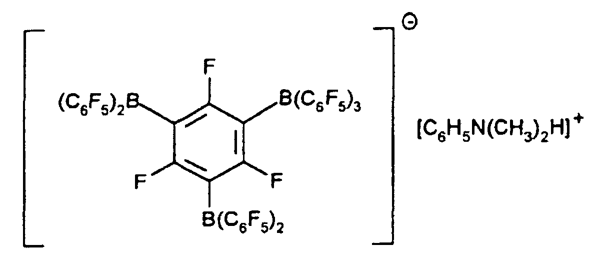

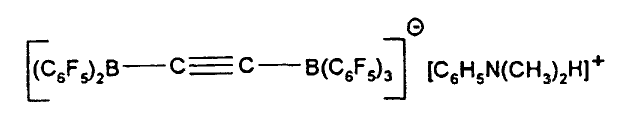

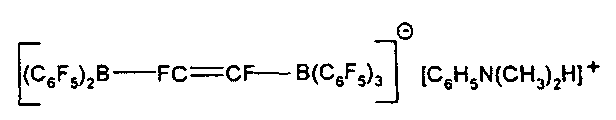

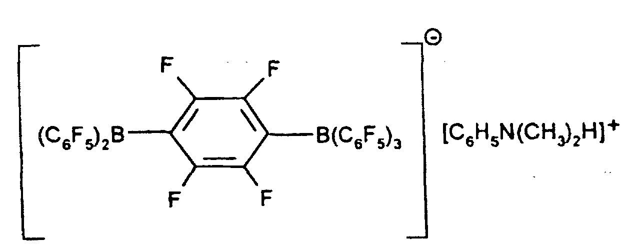

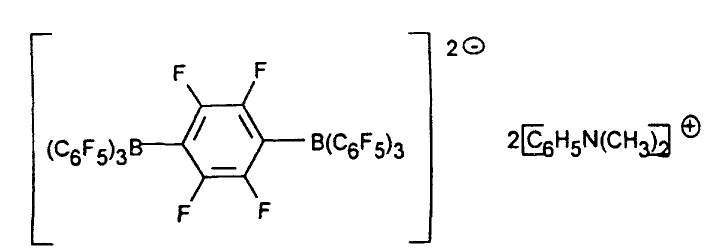

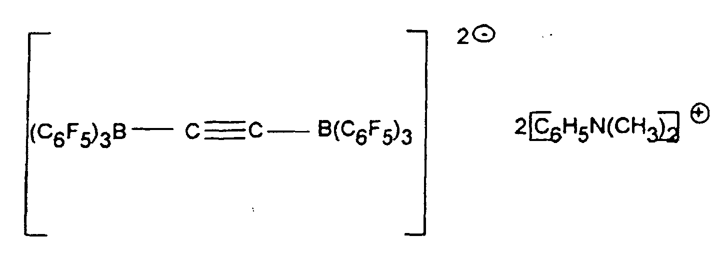

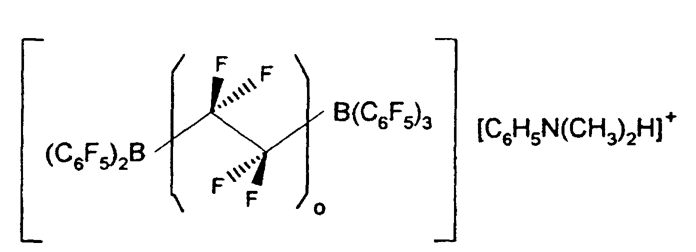

Anstelle des N,N-Dimethylanilinium-Kations [C₆H₅N(CH₃)₂H]⁺ kann alternativ CPh₃⁺ als Kation eingesetzt werden.

Die Herstellung einer Verbindung der Formel V kann z.B. nach folgendem Reaktionsschema ablaufen: 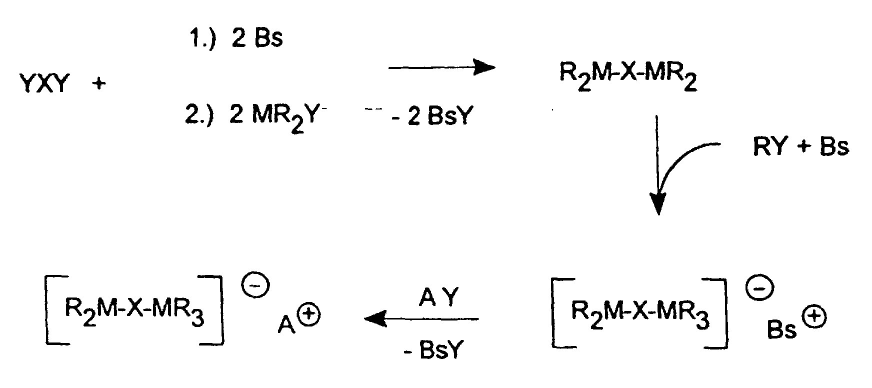 Hierbei ist
- X: eine C₁-C₄₀-kohlenstoffhaltige Gruppe sind wie eine C₁-C₄₀-Alkylen-, C₁-C₄₀-Halogen-Alkylen-, C₆-C₄₀-Arylen-, C₆-C₄₀-Halogen-Arylen-, C₇-C₄₀-Arylalkylen- oder C₇C₄₀-Halogen-Arylalkylen-, C₂-C₄₀-Alkinylen-, C₂-C₄₀-Halogen-Alkinylen-, C₂-C₄₀-Alkenylen- oder C₂-C₄₀-Halogen-Alkenylen-Gruppe,
- Y: unabhängig voneinander gleich oder verschieden eine Abgangsgruppe, bevorzugt ein Wasserstoff- oder Halogen-Atom,
- R: unabhangig voneinander gleich oder verschieden ein Halogenatom oder eine C₁-C₄₀-kohlenstoffhaltige Gruppe wie eine C₁-C₄₀-Alkyl-, C₁-C₄₀-Halogen-Alkyl-, C₆-C₄₀-Aryl-, C₆-C₄₀-Halogen-Aryl-, C₇-C₄₀-Arylalkyl- oder C₇-C₄₀-Halogen-Arylalkyl-Gruppe,
- Bs: eine Base, bevorzugt eine Organolithium-Verbindung oder eine Grignard-Verbindung,
- M: gleich oder verschieden sind und ein Element der Gruppen IIa, IIIa, IVa oder Va des Periodensystems der Elemente bedeuten und
- A: ein Kation der Gruppe la, IIa, IIIa, des Periodensystems der Elemente, ein Carbenium-, Oxonium- oder Sulfonium-Kation oder eine quartäre Ammonium-Verbindung ist.

Ebenfalls bevorzugt als Aktivator sind Verbindungen der Formel VI, worin 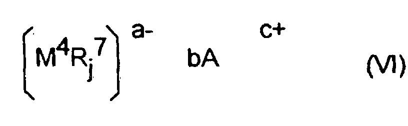
- R ⁷: unabhängig voneinander gleich oder verschieden ein Halogenatom oder eine C₁-C₄₀-kohlenstoffhaltige Gruppe sind, wie eine C₁-C₄₀-Alkyl, C₁-C₄₀-Halogen-Alkyl-, C₆-C₄₀-Aryl, C₆-C₄₀-Halogen-Aryl-, C₇-C₄₀-Arylalkyl- oder C₇-C₄₀-Halogen-Aryl-alkyl-Gruppe,
- M⁴: ein Element der Gruppe IIa, IIIa, IVa oder Va des Periodensystems der Elemente bedeutet,
- j: eine ganze Zahl von 1 bis 6 ist,
- a: gleich 0 oder 1 ist, b gleich 0 oder 1 ist und c gleich 0 oder 1 ist und a = b· c ist,
- A: ein Kation der Gruppe ia, IIa, IIIa des Periodensystems der Elemente, ein Carbenium-, Silylium-, Oxonium-, Sulfonium-Kation oder eine quartäre Ammonium-Verbindung ist.

Wenn a gleich 0 ist, so handelt es sich um eine neutrale Verbindung; wenn a ≥ 1 ist, so handelt es sich um eine negativ geladene Verbindung mit b Kationen A^{c+} als Gegenion.

Bevorzugt sind Verbindungen in denen M⁴ Bor oder Aluminium ist. R⁷ ist bevorzugt Pentafluorphenyl-, p-Trifluormethyl-phenyl-, Bis(trifluormethyl) phenyl-, Phenyl-, o-Tolyl-, o,p-Dimethylphenyl und m,m-Dimethylphenyl.

Beispiele für Verbindungen der Formel VI sind:
N,N-dimethylanilinium-tetrakis(pentafluorphenyl)borat
N,N-dimethylanilinium-tetraphenylborat
N,N-dimethylanilinium-tetrakis(o-tolyl)borat
N,N-dimethylanilinium-tetrakis[bis(trifluormethyl)phenyl]borat
N,N-dimethylanilinium-tetrakis(o,p-dimethylphenyl)borat
N,N-dimethylanilinium-tetrakis(m,m-dimethylphenyl)borat
N,N-dimethylanilinium-tetrakis(p-trifluormethyl-phenyl)borat
Triphenylcarbenium-tetrakis(pentafluorphenyl)borat
Triphenylcarbenium-tetraphenylborat
Triphenylcarbenium-tetrakis(c-tolyl)borat
Triphenylcarbenium-tetrakis[bis(trifluormethyl)phenyl]borat
Triphenylcarbenium-tetrakis(o,p-dimethylphenyl)borat
Triphenylcarbenium-tetrakis(m,m-dimethylphenyl)borat
Triphenylcarbenium-tetrakis(p-trifluormethyl-phenyl)borat
Tris(pentafluorphenylboran)
Trimesitylboran
Triphenylboran

Die mit einem oder mehreren Kohlenwasserstoffresten σ-substituierte Metallocenverbindung wird direkt in Losung durch Umsetzung mit einem Aktivator in eine katalytisch aktive Verbindung umgewandelt.
Der Aktivator kann mit einer mit einem oder mehreren Kohlenwasserstoffresten σ-substituierte Metallocenverbindung in einem stöchiometrischen Verhältnis 0,5 : 1 bis 50 : 1 eingesetzt werden. Besonders bevorzugt sind stöchiometrische Verhältnisse von 0,5 : 1 bis 4 : 1. Die Reaktionstemperatur kann dabei zwischen -20 und + 200 °C liegen. Besonders bevorzugt sind dabei Temperaturen zwischen 0 und + 20 °C.
Als Lösemittel für den Aktivator dienen bevorzugt organische Lösemittel, vorzugsweise aliphatische und/oder aromatische Kohlenwasserstoffe. Besonders bevorzugt sind dabei Hexan, Heptan, Octan, Toluol und Xylol. Ebenfalls bevorzugt sind etherischen Lösemittel wie z.B. Diethylether oder Tetrahydrofuran. Auch Lösemittelgemische können verwendet werden.

Die in dem erfindungsgemäßen Verfahren erhaltene Lösung wird anschließend mit einem Träger kontaktiert, wodurch ein geträgertes Katalysatorsystem entsteht. Geeignete Trägermaterialien sind beispielsweise Silikagele, Aluminiumoxide, festes Aluminoxan oder andere anorganische Trägermaterialien wie beispielsweise Magnesiumchlorid. Ebenfalls als Trägermaterial geeignet sind organische Polymere, wie z.B. Polyolefinpulver, in feinverteilter Form

Der Aktivator, z.B. starke, neutrale Lewissäuren, ionische Verbindungen mit lewissauren Kationen oder ionische Verbindungen mit Brönsted-Säuren als Kationen kann auch bereits vor seiner Zugabe zu der gelösten mit einem oder mehreren Kohlenwasserstoffresten σ-substituierten Metallocenverbindung kovalent an einen Träger gebunden sein. In diesem Fall werden die mit einem oder mehreren Kohlenwasserstoffresten σ-substituierten Metallocenverbindungen nach der Abtrennung unlöslicher Ruckstände in Losung direkt mit dem kovalent an einen Träger fixierten Aktivator umgesetzt, wodurch in der zweiten Reaktionsstufe direkt ein polymerisationsaktives, am Träger gebundenes, Katalysatorsystem gebildet wird.

Das in dem erfindungsgemäßen Verfahren hergestellte Katalysatorsystem kann zur Herstellung von Polyolefinen verwendet werden und dazu in ein Polymerisationsgefaß eindosiert werden. Bevorzugt werden Olefine z.B. der Formel R^{α}-CH=CH-R^{β} polymerisiert, worin R^{α} und R^{β} gleich oder verschieden sind und ein Wasserstoffatom, ein Halogenatom, eine Alkoxy-, Hydroxy-, Alkylhydroxy-, Aldehyd, Carbonsäure- oder Carbonsäureestergruppe oder einen gesättigten oder ungesättigten Kohlenwasserstoffrest mit 1 bis 20 C-Atomen, insbesondere 1 bis 10 C-Atomen bedeuten, der mit einer Alkoxy-, Hydroxy-, Alkylhydroxy-, Aldehyd-, Carbonsäure- oder Carbonsaureestergruppe substituiert sein kann, oder R^{α} und R^{β} mit den sie verbindenden Atomen einen oder mehrere Ringe bilden. Beispiele für solche Olefine sind 1-Olefine wie Ethylen, Propylen, 1-Buten, 1-Hexen, 4-Methyl-1-penten, 1-Octen, Styrol, cyclische Olefine wie Norbomen, Vinylnorbornen, Tetracyclododecen, Ethylidennorbornen, Diene wie 1,3-Butadien oder 1,4-Hexadien, Biscyclopentadien oder Methacrylsäuremethylester.

Insbesondere werden Propylen oder Ethylen homopolymerisiert, Ethylen mit einem oder mehreren C₃-C₂₀-α-Olefinen, insbesondere Propylen, und /oder einem oder mehreren C₄-C₂₀-Diene, insbesondere 1,3-Butadien, copolymerisiert oder mit Norbornen und Ethylen copolymerisiert.
Die Polymerisation wird bevorzugt bei einer Temperatur von 60 bis 300°C, besonders bevorzugt 30 bis 250°C, durchgeführt. Der Druck beträgt 0,5 bis 2500 bar, bevorzugt 2 bis 1500 bar. Die Polymerisation kann kontinuierlich oder diskontinuierlich, ein- oder mehrstufig, in Lösung, in Suspension, in der Gasphase oder in einem überkritischem Medium durchgeführt werden.

Das geträgerte Katalysatorsystem kann als Pulver oder noch Lösemittel behaftet wieder resuspendiert und als Suspension in einem inerten Suspensionsmittel in das Polymerisationssystem eindosiert werden.

Mit Hilfe des in dem erfindungsgemäßen Verfahren hergestellten Katalysatorsystems kann eine Vorpolymerisation erfolgen. Zur Vorpolymerisation wird bevorzugt das (oder eines der) in der Polymerisation eingesetzte(n) Olefin(e) verwendet.

Zur Herstellung von Polyolefinen mit breiter Molekulargewichtsverteilung werden bevorzugt Katalysatorsysteme verwendet, die zwei oder mehr verschiedene Metallocenverbindungen enthalten.

Zur Entfernung von im Olefin vorhandenen Katalysatorgiften ist eine Reinigung mit einem Aluminiumalkyl, beispielsweise Trimethylaluminium, Triethylaluminium oder Triisobutylaluminium vorteilhaft. Diese Reinigung kann sowohl im Polymerisationssystem selbst erfolgen oder das Olefin wird vor der Zugabe in das Polymerisationssystem mit der Al-Verbindung in Kontakt gebracht und anschließend wieder getrennt.

Als Molmassenregler und/oder zur Steigerung der Aktivität kann, falls erforderlich, Wasserstoff zugegeben werden. Der Gesamtdruck im Polymerisationssystem beträgt 0,5 bis 2500 bar, bevorzugt 2 bis 1500 bar. Dabei wird die Metallocenverbindung in einer Konzentration, bezogen auf das Übergangsmetall von bevorzugt 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet.

Vor Zugabe des Katalysatorsystems in den Reaktor kann zusätzlich eine andere Alkylaluminiumverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhandener Katalysatorgifte im Olefin) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 01 mmol Al pro kg Reaktorinhalt eingesetzt. Dadurch kann bei der Synthese eines geträgerten Katalysatorsystems das molare AI/M-Verhältnis klein gewahlt werden.

Die nachfolgenden Beispiele dienen zur naheren Erläuterung der Erfindung.

Allgemeine Angaben: Herstellung und Handhabung der Verbindungen erfolgten unter Ausschluß von Luft und Feuchtigkeit unter Argonschutz (Schlenk-Technik). Alle benötigten Lösemittel wurden vor Gebrauch durch mehrstündiges Sieden über geeignete Trockenmittel und anschließende Destillation unter Argon absolutiert. Die Charakterisierung der Verbindung erfolgt über ¹H-NMR Spektroskopie.

### Beispiel 1:

### Darstellung von Dimethylsilyl-bis-(2-methyl-4-phenylindenyl)-zirkonium-dimethyl (Verbindung A)

12 g (20 mmol) Dimethylsilyl-bis-(2-methyl-4-phenylindenyl)-zirkonium-dichlorid werden in 300 ml Toluol suspendiert. Dazu wird über 15 min. eine Lösung von 28 ml CH₃MgBr (1.4 M Toluol/THF) zugetropft. Das Reaktionsgemisch wird 2 h bei 70°C gerührt. Anschließend filtriert man heiß alle unlöslichen Bestandteile ab und wäscht den Rückstand mit 6 x 100 ml warmen Toluol nach. Die erhaltene klare, gelbe Lösung steht direkt weiteren Umsetzungen zur Verfügung.

Das ¹H-NMR Spektrum einer eingedampften Probe zeigt ausschließlich Signale von Vebindung A

¹H-NMR in CDCl₃: - 1,15 s (6H, Zr-CH3); 1,12 s (6H, Si-CH3); 2,10 s (6H, Cp-CH3), 6,9 s (2H, Cp); 7,0 - 7,7 m (16 H, C12H8)

Zur Aktivierung wird die oben erhaltene Losung auf 0°C gekühlt und anschließend mit 16 g (20 mmol) N,N-Dimethylaniliniumtetrakispentafluorphenylborat versetzt. Man rührt 20 Minuten nach und laßt die Losung auf Raumtemperatur erwärmen, wobei eine klare, dunkelrote Lösung entsteht.

### Beispiel 2:

### Darstellung von Dimethylsilyl-bis-(2-methyl-indenyl)-zirkoniumdimethyl (Verbindung B)

9.55 g (20 mmol) Dimethylsilyl-bis-(2-methyl-indenyl)-zirkoniumdichlorid werden in 150 ml Toluol suspendiert. Dazu wird über 15 Minuten eine Lösung von 28 ml CH₃MgBr (1.4 M Toluol/THF) zugetropft. Das Reaktionsgemisch wird 2 h bei 70°C gerührt. Anschließend filtriert man heiß alle unlöslichen Bestandteile ab und wäscht den Ruckstand mit 6 x 100 ml warmen Toluol nach. Die erhaltene klare, gelb, orange Losung steht direkt weiteren Umsezungen zur Verfügung.

Das ¹H-NMR Spektrum einer eingedampften Probe zeigt ausschließlich Signale von Vebindung B

¹H-NMR in CDCl₃: - 0,90 s (6H, Zr-CH3); 0,90 s (6H, Si-CH3); 1,98 s (6H, Cp-CH3), 6,6 s (2H, Cp); 6,7 - 7,5 m (16 H, C12H8)

Zur Aktivierung wird die oben erhaltene Lösung auf 0°C gekühlt und anschließend mit 18.4 g (20 mmol) Triethyltetrakispentafluorphenylborat versetzt. Man rührt 20 Minuten nach und laßt die Lösung auf Raumtemperatur erwärmen, wobei eine klare, dunkelrote Lösung entsteht.

### Beispiel 3:

### Darstellung von Dimethylsilyl-bis-(2-methyl-4-naphthylindenyl)-zirkonium-dimethyl (Verbindung C)

14.62 g (20 mmol) Dimethylsilyl-bis-(2-methyl-4-naphthylindenyl)-zirkonium-dichlorid werden in 300 ml Xylol suspendiert. Dazu wird über 15 Minuten eine Lösung von 28 ml CH₃MgBr (1.4 M Toluol/THF) zugetropft. Das Reaktionsgemisch wird 2 h bei 70°C gerührt. Anschließend filtriert man heiß alle unlöslichen Bestandteile ab und wäscht den Rückstand mit 6 x 100 ml warmen Xylol nach. Die erhaltene klare, gelbe Lösung steht direkt weiteren Umsezungen zur Verfügung.

Das ¹H-NMR Spektrum einer eingedampften Probe zeigt ausschließlich Signale von Vebindung C

¹H-NMR in CDCl₃: - 1,10 s (6H, Zr-CH3); 1,15 s (6H, Si-CH3); 2,10 s (6H, Cp-CH3), 6,7 s (2H, Cp); 6,9 - 8,0 m (20 H, C12H8)

Zur Aktivierung wird die oben erhaltene Losung auf 0°C gekühlt und anschließend mit 18.4 g (20 mmol) Triethyltetrakispentafluorphenylborat versetzt. Man rührt 20 Minuten nach und laßt die Losung auf Raumtemperatur erwarmen, wobei eine klare, rote Losung entsteht

### Beispiel 4:

### Darstellung von Dimethylsilyl-bis-(2-methyl-4,5-benzoindenyl)-zirkonium-dimethyl (Verbindung D)

11.5 g (20 mmol) Dimethylsilyl-bis-(2-methyl-4,5-benzoindenyl)-zirkonium-dichlorid werden in 200 ml Xylol suspendiert. Dazu wird über 15 Minuten eine Lösung von 28 ml CH₃MgBr (1.4 M Toluol/THF) zugetropft. Das Reaktionsgemisch wird 2 h bei 70°C gerührt. Anschließend filtriert man heiß alle unlöslichen Bestandteile ab und wäscht den Rückstand mit 6 x 100 ml warmen Xylol nach. Die erhaltene klare, gelbe Lösung steht direkt weiteren Umsezungen zur Verfügung.

Das ¹H-NMR Spektrum einer eingedampften Probe zeigt ausschließlich Signale von Vebindung D

¹H-NMR in CDCl₃: - 1,80 s (6H, Zr-CH3); 0,92 s (6H, Si-CH3); 1,98 s (6H, Cp-CH3), 7,0 s (2H, Cp); 7,1 - 7,8 m (12 H, C12H8)

Zur Aktivierung wird die oben erhaltene Lösung auf 0°C gekühlt und anschließend mit 16 g (20 mmol) N,N-Dimethylaniliniumtetrakispentafluorphenylborat versetzt. Man rührt 20 Minuten nach und läßt die Lösung auf Raumtemperatur erwärmen, wobei eine klare, dunkelrote Lösung entsteht.

### Beispiel 5:

9.55 g (20 mmol) Dimethylsilyl-bis-(2-methyl-indenyl)-zirkoniumdichlorid werden in 150 ml Toluol suspendiert. Dazu wird über 15 Minuten eine Losung von 28 ml CH₃MgBr (1.4 M Toluol/THF) zugetropft. Das Reaktionsgemisch wird 2 h bei 70°C gerührt. Anschließend filtriert man heiß alle unloslichen Bestandteile ab und wäscht den Rückstand mit 6 x 100 ml warmen Toluol nach. Die erhaltene klare, gelb, orange Losung (A) steht direkt weiteren Umsetzungen zur Verfugung.

5 g SiO₂ (MS 3030, Fa. PQ, getrocknet bei 200°C im Argonstrom) werden in 50 ml Pentan gerührt und bei - 40°C mit 10 ml n-Butyllithium (2.5 M in Hexan) versetzt. Man läßt die Suspension zügig auf Raumtemperatur kommen und rührt 2 Stunden nach. Anschließend werden 5.1 g Trispentafluorphenylbenzol zugegeben und die erhaltene Suspension wird 4 Stunden bei 40°C gerührt. Man läßt die Suspension auf Raumtemperatur abkühlen und gibt portionsweise 1.6 g N,N-Dimethylaniliniumhydro-chlorid dazu. Die Suspension wird 8 Stunden gerührt, anschließend filtriert und der Rückstand im Vakuum getrocknet. Der erhaltene Feststoff wird in 100 ml Toluol suspendiert und langsam mit Lösung (A) versetzt. Die entstandenen dunkelrote Suspension wird 30 Minuten nachgerührt und anschließend filtriert. Der rote Rückstand wird mit 4 x 40 ml Toluol gewaschen und danach im Vakuum getrocknet.

### Beispiel 6:

### Darstellung von Dimethylsilyl-bis- (indenyl)-zirkonium-dimethyl (Verbindung F)

9 g (20 mmol) Dimethylsilyl-bis-(indenyl)-zirkonium-dichlorid werden in 300 ml Toluol suspendiert Dazu werden bei 0°C 25 ml Methyllithium (1,4 M in Diethylether) zugetropft. Das Reaktionsgemisch wird 1 h bei 40°C und weitere 2 h bei Raumtemperatur gerührt. Anschließend filtriert man alle unlöslichen Bestandteile ab und wascht mit 3 x 100 ml Toluol nach. Die erhaltene klare, orange Lösung (F) steht direkt weiteren Umsetzungen zur Verfügung.

Das ¹H-NMR Spektrum einer eingedampften Probe zeigt ausschließlich Signale von Vebindung F

¹H-NMR in C₆D₆: - 1,05 s (6H, Zr-CH₃); 0,60 s (6H, Si-CH₃); 5,85 d (2H, Cp); 6,65 d (2H, Cp); 6,8 - 7,5 m (8 H, C₆H)

Zur Aktivierung wird die oben erhaltene Losung auf 0°C gekuhlt und anschließend mit 16 g (20 mmol) N,N-Dimethylaniliniumtetrakispentafluorphenylborat versetzt. Man rührt 20 Minuten nach und laßt die Losung auf Raumtemperatur erwarmen, wobei eine klare, rote Lösung entsteht.

### Beispiel 7:

### Darstellung von Tertbutylamido-(tetramethyl-η⁵-cyclopentadienyl)-dimethylsilyltitanium-dimethyl (Verbindung G)

3.4 g (10 mmol) Tertbutylamido-(tetramethyl-η5-cyclopentadienyl)-dimethylsilyltitanium-dichlorid werden in 200 ml Tetrahydrofuran suspendiert und auf 0°C gekühlt. Dazu wird zügig eine Lösung von 14 ml CH₃MgBr (1.4 M in Toluol/THF) zugetropft. Das Reaktionsgemisch wird 2 h bei Raumtemperatur und anschließend 1 h bei 50° C gerührt Es werden alle unloslichen Bestandteile abfiltriet und der Rückstand mit 3 x 100 ml Toluol gewaschen. Die erhaltene klare, hellgelbe Lösung (G) steht direkt weiteren Umsetzungen zur Verfügung.

Das ¹H-NMR Spektrum einer eingedampften Probe zeigt ausschließlich Signale von Vebindung G

¹H-NMR in C₆D₆: - 0,05 s (6H, Zr-CH₃); 0,45 s (9H, N-C(CH₃)₃); 1,40 s (6H, Si-CH₃); 1,90 s (6H, Cp-CH₃); 1,96 s (6H, Cp-CH₃)

Zur Aktivierung wird die oben erhaltene Losung auf 0°C gekühlt und anschließend mit 5.1 g (10 mmol) Trispentafluorphenylboran versetzt. Man rührt 20 Minuten nach und läßt die Lösung auf Raumtemperatur erwärmen, wobei eine trübe, orange Suspension entsteht

### Beispiel 8

### Darstellung von Brs[(2,3-dimethyl)-cyclopentadienyl] zirkonium-dimethyl (Verbindung H)

7 g (20 mmol) Bis[(2,3-dimethyl)-cyclopentadienyl] zirkonium-dichlorid werden in 100 ml Toluol gelöst Dazu werden bei Raumtemperatur zügig 28 ml CH₃MgBr (1.4 M in Toluol/THF) zugetropft. Das Reaktionsgemisch wird 2 h bei 70°C gerührt. Anschließend filtriert man heiß alle unlöslichen Bestandteile ab und wäscht den Rückstand mit 3 x 100 ml warmen toluol nach. Die erhaltene klare, hellgelbe Lösung (H) steht direkt weiteren Umsetzungen zur Verfügung.

Das ¹H-NMR Spektrum einer eingedampften Probe zeigt ausschließlich Signale von Vebindung H

¹H-NMR in C₆D₆: - 0,6 s (6H, Zr-CH₃); 1,2 s (6H, Cp-CH₃); 1,5 s (6H, Cp-CH₃); 4,8 t (2H, Cp-H); 5,2 t (2H, Cp-H); 5,5 t (2H, Cp-H)

Zur Aktivierung wird die oben erhaltene Lösung auf 0°C gekühlt und anschließend mit 16 g (20 mmol) N,N-Dimethylaniliniumtetrakispentafluorphenylborat versetzt. Man rührt 20 Minuten nach und läßt die Lösung auf Raumtemperatur erwärmen, wobei eine klare, rote Lösung entsteht.

### Beispiel 9:

### Darstellung von [4-( η⁵-3'-Trimethylsilyl-cyclopentadienyl)-4,6,6-trimethyl-(η⁵-4,5-tetrahydropentalen)]-zirkoniumdimethyl (Verbindung I)

4.4 g (10 mmol) [4-(η⁵-3'-Trimethylsilyl-cyclopentadienyl)-4,6,6-trimethyl-(η⁵-4,5-tetrahydropentalen)]-zirkoniumdichlorid werden in 100 ml Toluol suspendiert. Dazu wird über 30 min. eine Losung von 14 ml CH3MgBr (1.4 M in Toluol/THF) zugetropft. Das Reaktionsgemisch wird 1 h bei Raumtemperatur und 1 h bei 70°C gerührt. Anschließend filtriert man heiß alle unlöslichen Bestandteile ab und wäscht den Rückstand mit 3 x 100 ml Toluol nach. Die erhaltene klare, orange Lösung (I) steht direkt weiteren Umsetzungen zur Verfugung.

Das ¹H-NMR Spektrum einer eingedampften Probe zeigt ausschließlich Signale von Vebindung I

¹H-NMR CDCl₃: 7.0 - 5.2 (m, 6H, H-C(2'), H-C(4'), H-C(5'), H-C(1), H-C(2), H-C(3)); 2,7 (m, 14, 1H, H-C(5)), 2.45 (m, 14, 1 H, H-C(5)); 2 2 (m, 3H, CH₃); 1.8 (m, 3H, CH₃); 1.30 (m, 6H, CH₃); 0.20 (s, CH₃-Si); 0 .19 (s, GH₃-Si); - 0.45 (s, Zr-CH₃)

### Beispiel 10:

### Aktivierung und gleichzeitige Tragerung von Verbindung A

25 g SiO₂ (MS 3030, Fa. PQ, getrocknet bei 200°C im Argonstrom) werden in 100 ml Pentan gerührt und bei - 40°C mit 0.4 ml n-Butyllithium (2.5 M in Hexan) versetzt. Man laßt die Suspension zügig auf Raumtemperatur kommen und rührt 2 Stunden nach. Anschließend werden 0.5 g Trispentafluorphenylbenzol zugegeben und die erhaltene Suspension wird 2 Stunden bei 40°C gerührt. Man läßt die Suspension auf Raumtemperatur abkühlen und gibt portionsweise 0.16 g N,N-Dimethylaniliniumhydrochlorid dazu. Die Suspension wird 4 Stunden gerührt, anschließend filtriert und der Rückstand im Vakuum getrocknet. Der erhaltene Feststoff wird in 100 ml Toluol suspendiert und langsam mit 46 ml von Lösung (A) versetzt. Die entstandene rote Suspension wird 30 Minuten nachgerührt und anschließend filtriert. Der hellrote Rückstand wird mit 4 x 100 ml Toluol gewaschen und danach im Ölpumpenvakuum getrocknet. Zum Einschleusen in das Polymerisationssystem werden 1 g des getragerten Katalysators in 30 ml Exxsol® resuspendiert.

### Polymerisation

Parallel dazu wurde ein trockener 16-l-Reaktor zunächst mit Stickstoff und anschließend mit Propylen gespült und mit 10 l flussigem Propylen befüllt. Dann wurden 0,5 ml einer 20%igen Triisobutylaluminiumlösung in Varsol mit 30 ml Exxsol verdünnt in den Reaktor gegeben und der Ansatz bei 30°C 15 Minuten gerührt.
Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das Poylmer wurde im Vakuumtrockenschrank getrocknet.
Der Reaktor zeigte keine Beläge an Innenwand oder Rührer. Die Katalysatoraktivität betrug 126 kg PP/g Metallocen x h.

### Beispiel 11:

### Trägerung der aktivierten Verbindung B

15 g SiO₂ (MS 3030, Fa. PQ, getrocknet bei 800°C im Argonstrom) wurden in 60 ml Toluol suspendiert und tropfenweise unter Rühren langsam mit 23 ml der mit Triethylammonium-tetrakispentafluorphenylborat aktivierten in Beispiel 3 erhaltenen Lösung C versetzt. Man laßt 1 h bei Raumtemperatur rühren und entfernt dann das Lösungsmittel im Ölpumpenvakuum bis zur Gewichtskonstanz. Zum Einschleusen in das Polymerisationssystem werden 1 g des geträgerten Katalysators in 30 ml Exxsol® resuspendiert.

### Polymerisation:

Parallel dazu wurde ein trockener 16-l-Reaktor zunächst mit Stickstoff und anschließend mit Propylen gespült und mit 10 l flüssigem Propylen befüllt.
Dann wurden 0,5 ml einer 20%igen Triisobutylaluminiumlösung in Varsol mit 30 ml Exxsol verdünnt in den Reaktor gegeben und der Ansatz bei 30°C 15 Minuten gerührt.

Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das Poylmer wurde im Vakuumtrockenschrank getrocknet.
Der Reaktor zeigte keine Beläge an Innenwand oder Rührer. Die Katalysatoraktivität betrug 112 kg PP/g Metallocen x h.

### Beispiel 12:

### Darstellung von Dimethylsilyl-bis(2-methyl-indenyl)-zirkoniumdimethyl (Verbindung B)

9,55 g (20 mmol) Dimethylsilyl-bis-(2-methyl-indenyl)-zirkoniumdichlorid werden in 150 ml Toluol suspendiert. Dazu wird über 15 Minuten eine Lösung von 28 ml CH₃MgBr (1.4 M Toluol/THF) zugetropft. Das Reaktionsgemisch wird 2 h bei 70°C gerührt. Anschließend filtriert man heiß alle unlsölichen B estandteile ab und wäscht den Rückstand mit 6 x 100 ml warmen Toluol nach. Die erhaltene klare, gelb, orange Lösung (B) steht direkt weiteren Umsetzungen zur VErfügung.

Das ¹H-NMR Spektrum einer eingedampften Probe zeigt ausschließlich Signale von Verbindung B

¹H-NMR in CDCl_{3'} -0.90 S (6H, Zr-CH₃); 0,90 s (6H, Si-CH₃); 1,98 s (6H, Cp-CH₃), 6,6 s (2H, Cp); 6,7-7,5 m (16H, C₁₂H₈).

Zur Aktivierung wird die oben erhaltene Losung auf 0°C gekühlt und anschließend mit 14,2 g (10mmol) Bis-(N,N'-dimethylanilinium)-1,4-bis{(tri[pentafluorphenyl)-boryl}-2,3,5,6-tetrafluorbenzol versetzt. Man rührt 20 Minuten nach und läßt die Lösung auf Raumtemperatur erwamen, wobei eine klare, dunkelrote Lösung entsteht.

### Beispiel 13.

### Darstellung von rac-Dimethylsilyl-bis-(indenyl)-hafnium-dimethyl (Verbindung J)

10,7 g (20 mmol) rac-Dimethylsilyl-bis-(indenyl)-hafnium-dichlorid werden in 200 ml Toluol suspendiert. Dazu wird über 15 min eine Lösung von 28 ml CH₃MgBr (1.4 M Toluol/THF) zugetropft. Das Reaktionsgemisch wird 1 h bei 70°C gerührt. Anschließend filtriert man heiß alle unlöslichen Bestandteile ab und wäscht den Rückstand mit 5 x 100 ml warmen Toluol nach. Die erhaltene klare, gelbe Lösung (J) steht direkt weiteren Umsetzungen zur Verfügung.

Das ¹H-NMR Spektrum einer eingedampften Probe zeigt ausschließlich Signale von Verbindung J

¹H-NMR in CDDl₃: -1,70 s (6H, Zr-CH₃); 0,90 s (6H, Si-CH₃); 5,9 d (2H, Cp); 6,6 (2H, Cp); 6,8-7,6 m (8H, C₆H₄)

Zur Aktivierung wird die oben erhaltene Losung auf 0°C gekühlt und anschließend mit 16 g (20 mmol) N,N-Dimethylaniliniumtetrakispentafluorphenylborat versetzt. Man rührt 20 Minuten nach und laßt die Losung auf Raumtemperatur erwärmen, wobei eine klare, dunkelrote Lösung entsteht.

## Patentansprüche

1. Verfahren zur Herstellung eines Metallocen-Katalysatorsystems, wobei
eine Metallocenausgangsverbindung mit einer Kohlenwasserstoffrest-übertragenden Verbindung ausgewählt aus der Gruppe bestehend aus Grignard-Verbindungen und Organolithium-Verbindungen in einem Lösemittel umgesetzt wird und das Verhältnis von Metallocenausgangsverbindung zu Kohlenwasserstoffrest-übertragender Verbindung im Bereich von 1 : 0,1 bis 1 : 20 liegt und
die dabei entstandene, mit einem oder mehreren Kohlenwasserstoffresten σ-substituierte Metallocenverbindung ohne Isolierung in Lösung
mit einem Aktivator in ein polymerisationsaktives Katalysatorsystem überführt wird und anschließend mit einem Träger kontaktiert wird oder
mit einem Aktivator, der kovalent an einen Träger gebunden ist, in ein polymerisationsaktives Katalysatorsystem überführt wird.

2. Verfahren gemäß Anspruch 1, wobei die Umsetzung der Metallocenausgangsverbindung mit der Kohlenwasserstoffrest-übertragenden Verbindung bei einer Reaktionstemperatur von 20°C bis 100°C und einer Reaktionszeit von 5 Minuten bis 24 Stunden erfolgt.

3. Verfahren gemäß Anspruch 1 oder 2, worin das Lösemittel ein organisches Lösemittel ist.

4. Verfahren gemäß einem oder mehreren der Ansprüche 1 bis 3, worin die Metallocenausgangsverbindung ein Cyclopentadienylkomplex ist.

5. Verfahren gemäß einem oder mehreren der Ansprüche 1 bis 4, worin der Aktivator eine starke, neutrale Lewissäure, eine ionische Verbindung mit lewissauren Kationen oder eine ionische Verbindung mit Brönsted-Säure als Kationen ist.

6. Verfahren gemäß einem oder mehreren der Ansprüche 1 bis 5, worin das polymerisationsaktive Katalysatorsystem anschließend in ein Polymerisationsgefäß eindosiert wird.

7. Verfahren gemäß Anspruch 6, worin eines oder mehrere Olefine polymerisiert werden.

## Claims

1. A process for preparing a metallocene catalyst system, wherein
a metallocene starting compound is reacted in a solvent with a compound capable of transferring hydrocarbon radicals selected from the group comprising Grignard compounds and organolithium compounds, where the ratio of metallocene starting compound to compound capable of transferring hydrocarbon radicals is in the range from 1:0.1 to 1:20, and
the resulting metallocene compound which is σ-substituted by one or more hydrocarbon radicals is, in solution and without isolation,
converted into a polymerization-active catalyst system by means of an activator and is subsequently contacted with a support or
is converted into a polymerization-active catalyst system by means of an activator which is covalently bound to a support.

2. The process as claimed in claim 1, wherein the reaction of the metallocene starting compound with the compound capable of transferring hydrocarbon radicals is carried out at a reaction temperature of from 20°C to 100°C and for a reaction time of from 5 minutes to 24 hours.

3. The process as claimed in claim 1 or 2, wherein the solvent is an organic solvent.

4. The process as claimed in one or more of claims 1 to 3, wherein the metallocene starting compound is a cyclopentadienyl complex.

5. The process as claimed in one or more of claims 1 to 4, wherein the activator is a strong, uncharged Lewis acid, an ionic compound containing Lewis acid cations or an ionic compound containing Brönsted acids as cations.

6. The process as claimed in one or more of claims 1 to 5, wherein the polymerization-active catalyst system is subsequently metered into a polymerization vessel.

7. The process as claimed in claim 6, wherein one or more olefins are polymerized.

## Revendications

1. Procédé de préparation d'un système catalyseur métallocène, dans lequel
on fait réagir un composé de départ métallocène avec un composé véhiculant des résidus hydrocarbonés, choisi dans l'ensemble comprenant les composés de Grignard et les composés organiques du lithium dans un solvant, et le rapport du composé de départ métallocène au composé véhiculant des résidus hydrocarbonés est compris dans la plage de 1:0,1 à 1:20, et
le composé métallocène σ-substitué par un ou plusieurs radicaux hydrocarbonés, et qui se forment à cette occasion,
est converti sans isolement en solution avec un activateur en un système catalyseur ayant une activé de polymérisation, puis est mis en contact avec un support, ou bien
est converti avec un activateur lié à un support d'une manière covalente en un système catalyseur ayant une activité de polymérisation.

2. Procédé selon la revendication 1, dans lequel la réaction du composé de départ métallocène avec le composé véhiculant des résidus hydrocarbonés a lieu à une température de réaction de 20 à 100°C, pendant un temps de réaction de 5 minutes à 24 heures.

3. Procédé selon la revendication 1 ou 2, dans lequel le solvant est un solvant organique.

4. Procédé selon l'une ou plusieurs des revendications 1 à 3, dans lequel le complexe de départ métallocène est un complexe cyclopentadiényle.

5. Procédé selon l'une ou plusieurs des revendications 1 à 4, dans lequel l'activateur est un acide de Lewis neutre et fort, un composé ionique comportant des cations de type acide de Lewis, ou un composé ionique comportant un acide de Brönsted en tant que cations.

6. Procédé selon l'une ou plusieurs des revendications 1 à 5, dans lequel le système catalyseur ayant une activité de polymérisation est ensuite introduit dans un réacteur de polymérisation.

7. Procédé selon la revendication 6, dans lequel une ou plusieurs oléfines subissent une polymérisation.
